(19) Europäisches Patentamt
European Patent Office
Office européen des brevets

(11) EP 1 568 485 B1

(12) # EUROPEAN PATENT SPECIFICATION

(45) Date of publication and mention of the grant of the patent:
**08.09.2010 Bulletin 2010/36**

(51) Int Cl.:
***B32B 3/30*** *(2006.01)* ***B32B 27/34*** *(2006.01)*
***D06N 7/00*** *(2006.01)* ***A41D 31/02*** *(2006.01)*

(21) Application number: **05251132.6**

(22) Date of filing: **25.02.2005**

(54) **Waterproof and breathable composite film, and waterproof and breathable composite fabric**

Wasserdichter und Atmungsaktiver mehrschichtiger Folien-verbund und wasserdampfdurchlässiges und wasserdichtes Verbundgewebe

Feuille stratifiée et tissu composite, perméables à l'air et imperméables à l'eau

(84) Designated Contracting States:
**AT BE BG CH CY CZ DE DK EE ES FI FR GB GR HU IE IS IT LI LT LU MC NL PL PT RO SE SI SK TR**

(30) Priority: **26.02.2004 JP 2004051848**

(43) Date of publication of application:
**31.08.2005 Bulletin 2005/35**

(73) Proprietor: **JAPAN GORE-TEX, INC.**
**Setagaya-ku**
**Tokyo-To 156 (JP)**

(72) Inventor: **Sadato, Hiroki**
**Akaiwa-gun,**
**Okayama 709-0800 (JP)**

(74) Representative: **Shanks, Andrew et al**
**Marks & Clerk LLP**
**Aurora**
**120 Bothwell Street**
**Glasgow**
**G2 7JS (GB)**

(56) References cited:
**WO-A-01/12000**
**GB-A- 1 098 874**
**US-A1- 2002 193 024**
**US-A1- 2003 143 381**
**US-A1- 2003 167 551**

- **PATENT ABSTRACTS OF JAPAN vol. 2003, no. 01, 14 January 2003 (2003-01-14) & JP 2002 275766 A (WL GORE & ASSOCIATES LTD), 25 September 2002 (2002-09-25) & WO 98/06891 A (W.L. GORE & ASSOCIATES LTD; HALLEY, DAVID, GEORGE; CLARKSON, GEORGE;) 19 February 1998 (1998-02-19)**
- **PATENT ABSTRACTS OF JAPAN vol. 2002, no. 05, 3 May 2002 (2002-05-03) & JP 2002 020916 A (JAPAN GORE TEX INC), 23 January 2002 (2002-01-23)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 568 485 B1

## Description

## BACKGROUND OF THE INVENTION

1. Field of the Invention

The present invention relates to a film and a fabric that are highly waterproof and permeable to water vapor.

Various configurations have been proposed in conventional practice for waterproof moisture-permeable elements applied to waterproof clothing, waterproof gloves, and the like. With such waterproof moisture-permeable materials, when the waterproof clothing is worn, it is possible that the clothing will be damaged as a result of friction and the waterproofness and moisture permeability will be compromised; therefore, techniques for suppressing the deterioration of waterproofness and moisture permeability due to friction have been developed.

For example, Japanese Domestic Republication No. 2001-503107 and Japanese Laid-Open Patent Application No. 2002-20916 propose a technique wherein abrasion resistant dots (Domestic Republication No. 2001-503107) or protuberances (Japanese Laid-Open Patent Application No. 2002-20916) are formed in the surface of a waterproof moisture-permeable base material instead of a knit or another such protective material used in conventional practice (hereinbelow the dots in Domestic Republication No. 2001-503107 and the protuberances in Japanese Laid-Open Patent Application No. 2002-20916 are sometimes referred to collectively as "protuberances"). An extremely lightweight and thin waterproof moisture-permeable material can be obtained with this technique. Clothing products, tents, sleeping bags, and the like for which such a waterproof moisture-permeable material is used are lightweight and can be stored in a compact manner, and therefore they have the advantage of being easy to carry and are particularly suitable for use in mountainous areas that necessitate carrying. When waterproof clothes and the like are configured from this waterproof moisture-permeable material, the protuberances are formed in the surface in contact with the body. In such a configuration, the friction surface between the waterproof clothes and the body or other clothes (undergarments and the like) is the surface of the waterproof moisture-permeable base material on which the protuberances are formed; therefore, damage to the base material is suppressed and the waterproofness and moisture permeability are efficiently preserved.

Also, giving consideration to a pleasant feel and ease of wearing and removing waterproof clothes, it is preferable that the waterproof clothes and the body or other clothes worn underneath (inside) the waterproof clothes easily slide against each other. Although the waterproof moisture-permeable materials disclosed in Japanese Domestic Republication No. 2001-503107 and Japanese Laid-Open Patent Application No. 2002-20916 are lightweight, thin, and extremely effective in suppressing the decline in waterproofness and moisture permeability during use, the protuberances do not slide very well against the body or clothes worn underneath; therefore, there yet remains room for improvement in waterproof clothes configured from these materials in terms of a pleasant feel and the ease of wearing and removing the clothes.

Waterproof clothing made as a result of dispersing a specific amount of spherical particles with a specific diameter onto a waterproof layer formed on one side of a fabric is proposed in Japanese Laid-Open Patent Application No. 2002-61009 as a technique intended to improve the feel of waterproof clothes and the like. In this technique, the use of these spherical particles ensures that the waterproof clothing surface will slide easily.

It is believed that a pleasant feel and the ease of wearing and removing the clothes can be improved with the protuberances disclosed in Japanese Domestic Republication No. 2001-503107 and Japanese Laid-Open Patent Application No. 2002-20916 as a result of employing the method disclosed in Japanese Laid-Open Patent Application No. 2002-61009 (the used of spherical particles). However, the spherical particles tend to be shed when the waterproof clothes rub against the body or other clothes underneath or when the waterproof clothes are washed, which causes damage to the waterproof layer and may cause a deterioration of waterproof properties.

Accordingly, it is a primary purpose of the present invention to provide a waterproof moisture-permeable composite film that is lightweight and can preserve a high degree of waterproofness, moisture permeability, and durability when applied to waterproof cloths and other such clothing products, and that can ensure a satisfactory pleasant feel and ease in wearing and removing; as well as a composite fabric that uses this composite film, and various products configured from this composite fabric.

These and other purposes of the present invention will become evident from review of the following specification.

## SUMMARY OF THE INVENTION

According to a first aspect of the present invention there is provided a composite film having an abrasion-resistant layer on one side of a flexible composite film that is waterproof and permeable to water vapour; said waterproof moisture-permeable composite film wherein:

the flexible film contains a polar polymer; and

the abrasion-resistant layer contains a cross-linked polyamide resin.

The present invention provides a waterproof moisture-permeable composite film that is lightweight and can preserve a high degree of waterproofness, moisture permeability, and durability when applied to waterproof clothes and other such clothing products, and that can ensure a satisfactory pleasant feel and ease in wearing and removing; as well as a composite fabric that uses this composite film, and various products configured from this composite fabric.

The waterproof moisture-permeable composite film of the present invention whereby the objections described above can be achieved has an abrasion-resistant layer on one side of a flexible base material that is waterproof and permeable to water vapour, the flexible base material contains a polar polymer, and the abrasion-resistant layer contains a cross-linked polyamide resin.

The cross-linked polyamide resin is preferably obtained as a result of cross-linking a homopolymer or copolymer of Nylon 12 with a cross-linking agent having at least two functional groups that react with active hydrogen. Also, polyisocyanate is preferred as the cross-linking agent.

The flexible base material preferably contains a porous section, and is preferably a complex of a polar polymer and porous polytetrafluoroethylene.

For the complex pertaining to the flexible base material, one preferred example is a polar polymer on at least part of one side of a porous polytetrafluoroethylene film, and another preferred example is a polar polymer layer on one side of a polytetrafluoroethylene film, in which case it is recommended that the abrasion-resistant layer be formed via the polar polymer. A polyurethane resin is preferred as the polar polymer.

In the waterproof moisture-permeable composite film, 3 to 70% of the surface area of one side of the flexible base material is preferably covered by the abrasion-resistant layer, and the coefficient of static friction and the coefficient of dynamic friction between the surfaces on which the abrasion-resistant layer is formed are preferably both 0.7 or less as measured by a method conforming to ASTM D 1894.

The waterproof moisture-permeable composite fabric of the present invention is **characterized in that** the fabric is placed on the side of the waterproof moisture-permeable composite film described above opposite the side on which the abrasion-resistant layer is formed.

The clothing products, tent, and sleeping bag whose constituent elements include the waterproof moisture-permeable composite fabric of the present invention are also incorporated in the present invention.

The term "film" used in the present invention encompasses a concept including so-called sheets and films.

In the waterproof moisture-permeable composite film of the present invention, the flexible base material and the abrasion-resistant layer are configured from specific materials, the surface on which the abrasion-resistant layer is formed slides easily, and the abrasion-resistant layer and flexible base material have excellent adhesiveness. Therefore, the flexible base material is prevented from being damaged, and degradation of waterproofness and moisture permeability is efficiently suppressed because peeling or shedding of the abrasion-resistant layer is reduced even when the surface on which the abrasion-resistant layer is formed is subjected to a mechanical load.

Therefore, the waterproof moisture-permeable composite fabric of the present invention that contains the waterproof moisture-permeable composite film of the present invention as a structural element has satisfactory waterproofness and moisture permeability, the waterproofness and moisture permeability are durable, and the surface on which the abrasion-resistant layer is formed slides easily; also, the clothing products obtained from this fabric are lightweight, have excellent durability and a pleasant feel, and are easily worn and removed. Also, the tent and sleeping bag obtained from this fabric are lightweight and highly durable, and can be stored in a compact manner.

## DESCRIPTION OF THE DRAWINGS

The operation of the present invention should become apparent from the following description when considered in conjunction with the accompanying drawings, in which:

FIG. 1 is a cross-sectional view showing an example of the waterproof moisture-permeable composite film of the present invention; and

FIG. 2 is a cross-sectional view showing an example of the waterproof moisture-permeable fabric of the present invention.

## DETAILED DESCRIPTION OF THE INVENTION

The most significant characteristics of the waterproof moisture-permeable composite film of the present invention are that specific compositions are used as the material for the abrasion-resistant layer equivalent to the dots in Domestic Republication No. 2001-503107 and the protuberances in Japanese Laid-Open Patent Application No. 2002-20916, and as the material for the flexible base material that forms the abrasion-resistant layer. The present

invention is described in detail below.

FIG. 1 shows an example (cross-sectional view) of the waterproof moisture-permeable composite film of the present invention. An abrasion-resistant layer 12 (non-continuous abrasion-resistant layer) is formed on one side of a flexible base material 11 in a waterproof moisture-permeable composite film 10.

The flexible base material is waterproof and permeable to moisture (permeable to water vapor), and functions as a waterproof moisture-permeable layer for the waterproof moisture-permeable composite film.

The flexible base material has a moisture permeability preferably of about 50 to 6000 g/$m^2$, and more preferably of about 100 to 1000 g/$m^2$, as measured with the help of the method described in JIS L 1099 B-2, for example. The flexible base material also has a water resistance preferably of about 100 cm or greater, and more preferably of about 200 cm or greater, as measured with the help of the method described in JIS L 1092 A, for example.

The flexible base material contains a polar polymer. In the waterproof moisture-permeable composite film of the present invention, a cross-linked polyamide resin is used as the material for the abrasion-resistant layer (described in detail later), but this polyamide resin contains multiple polar groups (primarily amide groups) in its molecules. Therefore, configuring at least the part of the flexible base material that adheres to the abrasion-resistant layer from a polar polymer makes it possible to increase adhesiveness between the flexible base material and the abrasion-resistant layer. The flexible base material may be configured entirely from a polar polymer, or may be a complex of a polar polymer and another material.

A possible example of the polar polymer is a polymer having a carbonyl group in its molecules. This includes, for example, a polyurethane resin having a urethane bond in its molecules, a polyester resin having an ester bond in its molecules, a polyamide resin having an amide bond in its molecules, and the like. The polar polymer includes hydrophilic and hydrophobic polymers, but any polar polymer can be used and should be appropriately selected according to the configuration of the flexible base material.

Possible examples of the polyurethane resin include a hydrophilic polyurethane resin containing components that are formed as a result of a polyaddition reaction between a hydrophilic polyol (a polyoxyethylene-based polyol) and polyisocyanate; a hydrophobic polyurethane resin containing components that are formed as a result of a polyaddition reaction between a hydrophobic polyol (a polyester-based polyol, a polycarbonate-based polyol, or the like) and polyisocyanate. Possible examples of the polyisocyanate for forming the polyurethane resin include 4,4'-methylene bisphenyl diisocyanate (MDI), tolylene diisocyanate (TDI), xylene diisocyanate (XDI), 1,5-naphthalene diisocyanate (NDI), hexamethylene diisocyanate (HDI), isophorone diisocyanate (IPDI), tolidine diisocyanate (TODI), lysine diisocyanate (LDI), p-phenylene diisocyanate, trans-cydohexane-1,4-diisocyanate, hydrogenated MDI, and hydrogenated XDI.

Possible examples of the polyester resin include a polyester resin (hydrophilic polyester resin), part of which contains an ester unit resulting from a condensation reaction between a hydrophilic polyol (a polyoxyethylene-based polyol) and dicarboxylic acid. Possible examples of the polyamide resin include an N-alkoxyalkyl-modified nylon resin (N-alkoxymethyl-modified nylon resin (type 8 nylon resin) or another such hydrophilic polyamide resin. A durable flexible base material can be provided because the N-alkoxyalkyl-modified nylon resin can form cross-links by means of condensation between alkoxyalkyl portions.

Of these examples, polyurethane resins are particularly preferred because of their excellent moisture permeability, elasticity, and stretching capabilities, as well as low cost.

The flexible base material may have a nonporous structure devoid of any substantial pores, or may also have a structure containing a porous section. Possible examples of a flexible base material with a nonporous structure include a film configured from the hydrophilic polyurethane resin described above (a hydrophilic polyurethane resin film, for example, "TSO-CD" or the like made by Sheedom), a film configured from the hydrophilic polyester resin described above (a hydrophilic polyester resin film, for example, Flecron type F or the like made by OG Corporation).

The flexible base material with a structure containing a porous section is roughly classified in the following configurations (1) and (2).

(1)A layer (continuous layer) of the polar polymer previously given as an example (hereinafter referred to as "polar polymer layer") is formed on one side of a porous film (a porous structure in the form of a film) that is not sufficiently Waterproof;

(2) The polar polymer previously given as an example is placed at least in the location in which the abrasion-resistant layer is to be formed on the surface of a porous film that is waterproof and permeable to moisture.

The porous film (the porous structure in the form of a film) in the configuration in (1) is not particularly limited as long as it is permeable to moisture, and possible examples thereof include a polyurethane resin film configured from a hydrophobic polyurethane resin, a porous polyester resin film configured from a hydrophobic polyester resin, and other such films configured from the various polar polymers (hydrophobic polar polymers) previously given as examples; woven fabric, knit fabric, nonwoven fabric, and other such fibrous bulk material configured from synthetic fibers (polyamide fibers, polyester fibers, acrylic (polyacrylonitrile) fibers, polyurethane fibers, polyolefin fibers, polyvinyl chloride fibers,

polyvinylidene chloride fibers, polyfluorocarbon fibers) or natural fibers (cotton, animal fur (wool), silk, linen). In addition, porous films of resins not made of the polar polymers described above (for example, polyethylene, polypropylene, and other such polyolefin resins) can also be used.

The thickness of the porous film in the configuration in (1) is 5 μm or greater, more preferably 10 μm or greater, and 300 μm or less, and more preferably 100 μm or less, for example. If the thickness of the porous film is too low, the waterproof moisture-permeable composite film tends to be difficult to handle during manufacturing, and if the thickness is too great, the elasticity of the film is compromised and the moisture permeability tends to decrease. The thickness of the various films mentioned in the present specification is the average thickness (a value measured in a state under no load other than a main spring load) as measured with the help of a dial gauge (for example, a 1/1000 mm dial thickness gauge made by Teclock) (similar to the Embodiments described later).

In the configuration in (1), a polar polymer layer is placed on one side of these porous films. This polar polymer layer is a layer for ensuring waterproof and moisture-permeable properties, and also fulfills the role of a layer that is adhesive with respect to the abrasion-resistant layer. Consequently, the polar polymer layer pertaining to the configuration in (1) must be waterproof and permeable to moisture. From among the various polar polymers previously given as examples, a layer formed by a hydrophilic polar polymer (hydrophilic polyurethane resin, hydrophilic polyester resin, hydrophilic polyamide resin) will have waterproof and moisture-permeable properties sufficient to meet the requirements of the present invention.

The thickness of the polar polymer layer in the configuration in (1) is not particularly limited as long as the waterproof and moisture-permeable properties required for the flexible base material can be ensured, but ideally the thickness is 5 μm or greater and more preferably 7 μm or greater, and 200 μm or less and more preferably 100 μm or less, for example.

A possible example of the porous film in the configuration in (2) is a porous polytetrafluoroethylene (PTFE) film. Possible examples of the porous PTFE film include stretched porous PTFE films such as those disclosed in Japanese Laid-Open Patent Application No. 46-7284, Japanese Laid-Open Patent Application No. 50-22881, and Japanese Domestic Republication No. 3-504876. Specifically, the film is obtained as a result of molding a paste that is a mixture of a fine powder of PTFE (degree of crystallization 90% or greater) and a molding agent, removing the molding agent from the molded article, then stretching the molded article at high temperatures (less than the melting point of PTFE (about 327˚C), for example, about 300˚C) and high speed, and baking as necessary.

During stretching, a uniaxially stretched porous PTFE film is obtained if the molding article is stretched only uniaxially in the MD direction (the longitudinal direction during manufacture of the stretched porous PTFE film) or the TD direction (the direction perpendicular to the MD direction), and a biaxially stretched porous PTFE film is obtained if the molded article is stretched biaxially in both the MD and TD direction. Either a uniaxially or biaxially stretched porous PTFE film may serve as the porous film used for the flexible base material in the present invention, but a biaxially stretched porous PTFE film is more preferred because the characteristic values described later are more easily achieved.

It should be noted that in a uniaxially stretched porous PTFE film, nodes (folded crystals) have a thin island shape orthogonal to the stretching direction, and lattice-shaped fibrils (linear molecular bundles obtained as a result of stretching and extracting folded crystals) are oriented in the stretching direction so as to bridge the space between the nodes. The result is a fibrous structure in which the spaces between fibrils or between fibrils and nodes constitute pores. Also, in a biaxially stretched porous PTFE film, the result is a fibrous structure resembling a spider's web, wherein the fibrils expand in the radial direction, the nodes joining the fibrils are in the form of islands, and there are multiple spaces between the fibrils and the nodes.

Ideally, the porosity of the porous PTFE film is 50% or greater and preferably 60% or greater, and is also 98% or less and preferably 95% or less. If the porosity is too low, the moisture permeability is sometimes insufficient, and if the porosity is too high, strength is sometimes insufficient.

The porosity is a value determined from the apparent density $\rho_1$ (g/cm$^3$) of the stretched porous PTFE film as measured with the help of a method conforming to JIS K 6885 and the density $\rho_0$ of the PTFE (2.2 g/cm$^3$) using the following formula:

$$\text{Porosity (\%)} = 100 \times (\rho_0 - \rho_1)/\rho_0$$

The porosity values of the porous PTFE films in the present specification were all measured with the help of this method.

Also, it is recommended that the average pore diameter in the porous PTFE film be 0.01 μm or greater, preferably 0.1 μm or greater, and 10 μm or less, preferably 1 μm or less. A porous PTFE film with an average pore diameter that is too small would be difficult to manufacture. If the average pore diameter is too large, handling may become difficult because the film will lose its waterproof properties and will also be reduced in strength. The average pore diameter of the porous PTFE film is a value measured with the help of a method conforming to ASTM F-316.

Ideally, the thickness of the porous PTFE film is 7 μm or greater and preferably 10 μm or greater, and is also 300 μm or less and preferably 100 μm or less. If the thickness is too low, the waterproof moisture-permeable composite film tends to be difficult to handle during manufacturing, and if the thickness is too great, the elasticity of the film is compromised and the moisture permeability tends to decrease.

In the porous PTFE film, the entire back surface, including the inner surfaces of the pores, is preferably covered with a water and oil repellent. The phrase "the entire back surface including the inner surfaces of the pores is covered" used herein means that in the stretched porous PTFE film described above, the pores are maintained while the entire back surface of the film, including the surfaces of the fibrils and nodes in the interior of the film, is covered.

A possible example of the preferred water and oil repellent is a polymer with water repelling and oil repelling properties. A recommended example of such a polymer is a polymer having a fluorine-containing side chain.

A polymer having this fluorine-containing side chain and a method for covering a porous PTFE film with this polymer are disclosed in WO94/22928, for example. An example thereof is given below.

A polymer having a fluorine-containing side chain is shown with the help of the following general formula (I)

[Formula 1]

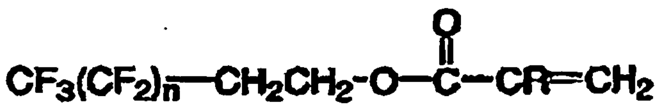

(I)

(In the formula, n is an integer 3 to 13, and R is hydrogen or a methyl group)

A polymer obtained as a result of polymerizing a fluoroalkyl acrylate and/or fluoroalkyl methacrylate expressed by the formula above (the fluorinated alkyl portion preferably has 6 to 16 carbon atoms) can be preferably used.

An aqueous microemulsion of the fluorine-containing polymer is used to cover the entire back surface of the porous PTFE film, including the inner surfaces of the pores, with the polymer having a fluorine-containing side chain (hereinafter sometimes referred to simply as "fluorine-containing polymer"). In the aqueous microemulsion, a fluorine-containing polymer, water, and a fluorine-containing surfactant (for example, ammonium perfluorooctanoate) are used to bring the average particle diameter of the fluorine-containing polymer to 0.01 to 0.5 μm.

After the porous PTFE film is impregnated with the aqueous microemulsion, the film is heated to remove the water and the fluorine-containing surfactant, the fluorine-containing polymer is melted, and the entire surface of the porous PTFE film, including the inner surfaces of the pores, is covered. A porous PTFE film can thereby be form with excellent water repelling and oil repelling properties while the pores are preserved.

Also, in addition to the fluorine-containing polymer described above, an "AF polymer" made by DuPont or "Cytop" made by Asahi Glass can be used as the water and oil repellent. In order to cover the entire surface of the porous PTFE film, including the inner surfaces of the pores, with these polymers, the porous PTFE film can be impregnated with a solution obtained as a result of melting these polymers in "Fluorinert" made by 3M, for example, or another such inactive solvent, and then the resulting product is heated to evaporate and remove the solvent.

Covering the entire surface of the porous PTFE film, including the inner surfaces of the pores, with a water and oil repellent as described above makes it possible to suppress a decrease in the hydrophobic properties of the film because when various impurities adhere to the film, the impurities do not easily permeate into the film.

In the configuration in (2), the polar polymer previously given as an example is placed at least on the section where the abrasion-resistant layer is to be formed on the surface of the porous PTFE film or another such porous film. Specifically, in the configuration in (2), the polar polymer can fulfill a rote as a layer that is adhesive with respect the abrasion-resistant layer because the waterproof and moisture-permeable properties can be ensured by the porous film. Consequently, the polar polymer should only be on the section of the flexible base material where the abrasion-resistant layer is to be formed. Also, in the configuration in (2), it is preferable that the polar polymer layer (continuous layer) be formed on one side f the porous film.

In the configuration in (2), for example, when the polar polymer layer is formed, it is recommended that the thickness of the polar polymer layer be 5 μm or greater and preferably 7 μm or greater, and be 200 μm or less and preferably 50 μm or less. If the thickness of the polar polymer layer is too low, the layer is difficult to manufacture in a stable manner and water resistance is insufficient. Conversely, if the thickness of the polar polymer layer is too great, both moisture permeability and flexibility decrease, and the texture becomes rigid as a result. Also, even if the polar polymer is not formed in a continuous layer, it is still preferred that the polar polymer layer has the thickness described above in each of the locations in which the polar polymer is formed, for the same reasons as described for the polar polymer layer.

One example of the flexible base material in the configuration in (2) is a PTFE film having a hydrophilic layer (polyether-polyurethane) disclosed in Japanese Laid-Open Patent Application No. 55-7483, for example.

Regardless of the configuration in (2), it is preferred that the mass of the flexible base material per unit surface area In the configuration in (1) be 7 g/$m^2$ or greater and preferably 10 g/$m^2$ or greater, and 300 g/$m^2$ or less and preferably 100 g/$m^2$ or less. In terms of thickness, it is preferred that the thickness be 7 $\mu$m or greater and preferably 15 $\mu$m or greater, and 400 $\mu$m or less and preferably 150 $\mu$m or less. If the mass or thickness per unit surface area is too low, the strength of the flexible base material may be insufficient, and if they are too high, then there is a tendency for the flexibility, low weight, and moisture permeability of the product to be compromised.

In the configurations in (1) and (2), part of the polar polymer may penetrate into the pores in the porous film.

Regardless of the configuration in (2), possible examples of the method for forming the polar polymer layer on the surface of the porous film include a coating method of coating the porous film with a solution (or dispersion liquid) of the polar polymer and drying the product, a method of impregnating a polar polymer solution (or dispersion liquid) with the porous film and drying the product, a method of laminating a film of the polar polymer over the porous film, and other such methods. The polar polymer film may be laminated over the porous film by means of heat-sealing, or an adhesive may be used if such use does not hinder the effects of the present invention. If a polar polymer film is laminated over the porous film using an adhesive, for example, the moisture permeability is preferably ensured as a result of partially coating the laminated surface with the adhesive, or as a result of entirely or partially applying an organic solvent solution of the moisture-permeable polar polymer (hydrophilic polar polymer) previously given as an example.

Also, when the polar polymer is formed on the surface of the porous film without forming a continuous layer in the configuration in (2), another possibility, in addition to the same coating method as the polar polymer layer formation method described above, is a method of forming dots or the like of the polar polymer on the surface of a mold-release film, and transferring these dots to the surface of the porous film.

The abrasion-resistant layer is a layer for protecting the flexible base material. The abrasion-resistant layer described above has a role as a waterproof moisture-permeable layer, and therefore the waterproof and moisture-permeable properties (particularly the waterproof properties) are compromised if the flexible base material is damaged when the flexible base material is subjected to a mechanical load during use or washing (friction, abrasion, scratching, or the like). The flexible base material is protected from a mechanical load as described above, and the waterproof and moisture-permeable properties are preserved by providing the abrasion-resistant layer to the surface of the flexible base material on which the polar polymer is located.

The abrasion-resistant layer relating to the present invention contains a cross-linked polyamide resin. The use of such a material allows the abrasion-resistant layer to easily slide against the body or other clothing (clothes or the like worn underneath). As a result, clothing products (clothes, gloves, and the like) that use the waterproof moisture-permeable composite film of the present invention as a structural material have an improved pleasant feel and are easy to wear and remove.

Also, the molecules of the polyamide resin contain a large number of polar groups (amide groups and the like), so the polar polymer in the flexible base material is highly hydrophilic. Therefore, adhesiveness between the abrasion-resistant layer and the flexible base material is strong, and the abrasion-resistant layer can be efficiently prevented from peeling or shedding. Furthermore, the polyamide resin has the characteristic of being highly workable because the melt viscosity suddenly decreases when the resin is heated to its melting point or greater.

The polyamide resin described above is not particularly limited as long as it has hot melt properties. Specific examples include nylon 46 (A: diaminobutane, C: adipic acid), nylon 66 (A: hexamethylene diamine, C: adipic acid), nylon 610 (A: hexamethylene diamine, C: sebacic acid), and other such resins produced as a result of the polycondensation of a diamine (A) and a dicarboxylic acid (C); nylon 6 ($\varepsilon$-caprolactam), nylon 12 ($\omega$-laurolactam), and other such resins produced as a result of the ring-opening polymerization of cyclic lactams; nylon 11 (aminoundecanoic acid) and other such resins produced as a result of the condensation of an amino-carboxylic acid; materials consisting of two or more nylon copolymers (nylon 6/11, nylon 6/12, nylon 66/10, nylon 6/66/12, nylon 6/69/12, nylon 6/610/12, nylon 6/612/12, nylon 6/66/11, nylon 6/66/69/12, nylon 6/66/610/12, nylon 6/66/612/12, nylon 6/66/11/12, nylon 6/69/11/12); and modified polyamides (N-alkoxymethyl modified polyamide) and other such resins produced as a result of the partial alkoxymethylation of the hydrogen in the amide groups of these nylons. Of these examples, a homopolymer or copolymer of nylon 12 is preferred (particularly a copolymer of nylon 12) because the melting point of such a material can be easily reduced and the material can be processed with ease. Commercial products provided by polyamide resin suppliers can be used for these polyamide resins.

A conventional plasticizer may be added to the polyamide resin for the purpose of adjusting the melting point within a range that does not hinder the effects of the present invention.

The polyamide resin constituting the abrasion-resistant layer has a cross-linked structure. A cross-linked structure improves the heat resistance of the abrasion-resistant layer, and the abrasion-resistant layer is therefore prevented from undergoing deformation or heat degradation even if the clothing product using the waterproof moisture-permeable composite film is dry cleaned, ironed, or subjected to other such treatments at high temperatures.

In one possible example of the cross-linked structure, the polyamide resin previously given as an example is cross-linked using a cross-linking agent. Since the polyamide resin has active hydrogen in its molecules, a compound

having at least two functional groups that react with this active hydrogen can be used as the cross-linking agent.

One possible example of such a cross-linking agent is polyisocyanate. Possible examples that can be used as the polyisocyanate include diisocyanate; triisocyanate; a modified product of diisocyanate or triisocyanate (a dimer, a trimer, a modified carbodiimide, a modified polymer, or the like); an adduct with a monomeric polyol wherein diisocyanate or triisocyanate is modified at a mole ratio of at least two moles of NCO per one mole of OH; and the like, which can be used singly or in a mixture. More specifically, possible examples that can be used to form the polyurethane resin for the polar polymer include the various polyisocyanates already given as examples, specifically, MDI, TDI, XDI, NDI, HDI, IPDI, TODI, LDI, p-phenylene diisocyanate, transcydohexane-1,4-diisocyanate, hydrogenated MDI, hydrogenated XDI. It is also possible to use blocked products obtained as a result of blocking the isocyanate groups of these polyisocyanates with conventional blocking agents (oximes, lactams, phenols, alcohols). Commercial products provided by various suppliers can be used as these polyisocyanates (including blocked products). Blocked products of polyisocyanate in particular are widely available as commercial products in emulsion form, the most preferred of which are those that are highly stable when water is used as a medium.

The amount in which the cross-linking agent is used depends on the number of functional groups (functional groups that react with active hydrogen) in the cross-linking agent per molecule, but it is ideal to have 1 part by mass or more per 100 parts by mass, and preferably 3 parts by mass or more, of the polyamide resin. Also, the amount is 30 parts by mass or less, and preferably 10 parts by mass or less, for example. If the amount in which the cross-linking agent is used is too small, insufficient cross-links may result and the abrasion-resistant layer may have insufficient heat resistance. Conversely, if the amount of the cross-linking agent is too great, the resin of the abrasion-resistant layer becomes brittle, which may induce deterioration due to a decrease in light resistance.

Flame retardants, coloring agents, deodorizers, antibacterial agents, antioxidants, fillers, plasticizers, ultraviolet blocking agents, light absorbing agents, and other such additives may be added as necessary to the polyamide resin (cross-linked polyamide resin).

The abrasion-resistant layer may be a continuous layer entirely covering one side of the flexible base material, and may be flat with a linear (a plurality of lines aligned in parallel fashion), lattice, or other such continuous shape, but it is normal for the polyamide resin constituting the abrasion-resistant layer to be less elastic than a polyurethane resin, for example, which is usually hard. Therefore, the abrasion-resistant layer preferably has a configuration whereby the elasticity of the waterproof moisture-permeable composite film can be ensured.

Specific examples include a configuration having thin sections, a configuration wherein the covered surface area ratio is lowered in relation to the surface area of the side of the flexible base material, and the like. The configuration wherein the covered surface area ratio has been lowered has a non-continuous layer in addition to the continuous abrasion-resistant layer being (for example, the previously described linear or lattice configuration as viewed within a plane). A waterproof moisture-permeable composite film having an abrasion-resistant layer with such a configuration can be bent at sections where the abrasion-resistant layer is thin or at sections where the abrasion-resistant layer is not formed, and therefore the original elasticity of the flexible base material can be efficiently preserved even if an abrasion-resistant layer configured from a relatively hard resin is provided. Consequently, the film is suitable for clothing and other products requiring elasticity.

When the abrasion-resistant layer is non-continuous, the configuration thereof is not particularly limited as long as flexibility can be sufficiently ensured. One example is a configuration with a plurality of individual protuberances (dots).

For example, in terms of ensuring the elasticity of the waterproof moisture-permeable composite film, the abrasion-resistant layer preferably covers 3% or greater and more preferably 7% or greater, and 70% or less and more preferably 40% or less of the surface area of one side of the flexible base material. If the surface area ratio covered by the abrasion-resistant layer is too low, abrasion resistance may be insufficient as a result. Conversely, if the covered surface area ratio is too great, the texture of the waterproof moisture-permeable composite film becomes hard and there is a tendency for the waterproof properties to be reduced.

Also, when the abrasion-resistant layer is non-continuous and is configured with the above-mentioned protuberances, for example, the ideal size of the individual protuberances in terms of their surface area as viewed within a plane is 0.01 $mm^2$ or greater and preferably 0.02 $mm^2$ or greater, and 4.0 $mm^2$ or less and preferably 2.0 $mm^2$ or less. If the surface area of the protuberances is too small, sufficient abrasion resistance cannot be obtained because the height of the protuberances cannot be increased. In this case, methods for increasing the covered surface area ratio to obtain sufficient abrasion resistance may be considered, but these methods may have adverse effects on moisture permeability and texture. Conversely, if the surface area of the protuberances is too great, the material can only bend at the edge portions of the protuberances, flexibility is lost, and the base material is easily damaged at the bending portions.

The covered surface area ratio of the abrasion-resistant layer and the surface area of the individual protuberances are values determined by enlarging the abrasion-resistant layer by one hundred times in a 2.6 mm $\times$ 3.5 mm field of vision with a digital microscope "VH-7000" made by Keyence Corporation, and calculating the surface area of the protuberances with the accompanying software.

There are no particular limits on the individual shapes of the abrasion-resistant layer, and cones, triangular

pyramids, quadrangular pyramids, hemispheres, and other various shapes can be used for the protuberances. The peaks of the protuberances are preferably smooth without angles in order to prevent the protuberances from being shed or damaged when rubbing against other clothes or the body.

Also, the amount of the abrasion-resistant layer used is preferably 1 g/$m^2$ or greater and more preferably 3 g/$m^2$ or greater, and is 50 g/$m^2$ or less and more preferably 20 g/$m^2$ or less. Ideally, the thickness is 5 $\mu$m or greater and preferably 30 $\mu$m or greater, and 500 $\mu$m or less and preferably 200 $\mu$m or less.

Next, the method for forming the abrasion-resistant layer on the flexible base material will be described. In the first stage, a polyamide resin (including a cross-linking agent) in liquid (including paste) or powder form is disposed on the surface of the flexible base material. When the abrasion-resistant layer is non-continuous, possible examples of methods for achieving this include screen printing, gravure printing, spray printing, and other such conventional methods in the case of a liquid, and powder scattering and the like in the case of a powder.

Methods for making the polyamide resin (including a cross-linking agent) into liquid form include methods for preparing an organic solvent solution (or dispersed liquid) and methods of melting the polyamide resin, but these are ineffective in terms of economic efficiency or workability because the former has problems with treating organic solvents, while the latter requires performing printing (coating) at high temperatures.

It is also possible, for example, to make the polyamide resin into powder form with a diameter of about 100 $\mu$m or less, to disperse the powder in water or another such dispersion medium to form a paste, and to use the paste. The use of water as the dispersion medium is effective in terms of economical efficiency and workability because the organic solvent can be easily processed and printing can be performed at high temperatures.

When the polyamide resin is made into liquid form (including paste form) using a solvent or a dispersion medium, the amount of the polyamide resin used per 100 parts by weight of the solvent or dispersion medium is preferably 5 to 70 parts by weight, and more preferably 20 to 40 parts by weight.

When the polyamide resin is made into paste form, it is also preferable to adjust the printability (coatability) using a conventional surfactant, antifoaming agent, thickener, adhesive, or the like. For example, when a polyamide resin paste is applied by means of screen printing, gravure printing, or the like, the viscosity of the paste is preferably 500 to 30000 mPa·s (more preferably 5000 mPa·s or less). The viscosity of the paste referred to herein is a value measured at a temperature of 25˚C and a rotational speed of 50 rpm using a viscometer "Model TV-10" made by Toki Sangyo.

In the case of a polyamide resin that has been made into liquid form (including paste form) using a solvent or dispersion medium, the solvent or dispersion medium is dried and removed after the resin is disposed on the surface of the flexible base material. A method such as one involving the use of hot air can be employed for drying.

In the second stage of forming the abrasion-resistant layer, the polyamide resin (including a cross-linking agent) disposed on the surface of the flexible base material is bonded to the base material. Specifically, the polyamide resin on the surface of the flexible base material is heated with the base material at a temperature equal to or greater than the melting point of the polyamide resin, and is then cooled (at room temperature, for example). The heating temperature should be appropriately determined with consideration to the melting point of the polyamide resin used, the reaction initiating temperature of the cross-linking agent, the heat resistant temperature of the flexible base material, but is roughly 110 to 210˚C.

A hot-air circulating oven with a pin tenter, an oven with an infrared heater, or the like can be used for the heating. A cooling roll can be used for the cooling after heating, and cool air (about room temperature, for example) may be supplied to the surface of the abrasion-resistant layer.

The abrasion-resistant layer and the flexible base material are firmly integrated by means of the steps in this second stage. In the resulting waterproof moisture-permeable composite film, therefore, the abrasion-resistant layer can be prevented from peeling or shedding and has extremely superior abrasion resistance.

In the waterproof moisture-permeable composite film of the present invention, using a specific resin (cross-linked polyamide resin) for the abrasion-resistant layer allows the abrasion-resistant layer to easily slide against other surfaces.

Specifically, the coefficient of static friction and the coefficient of dynamic friction measured according to ASTM D 1894 when surfaces of the waterproof moisture-permeable composite film on which the abrasion-resistant layer are formed are pressed together are both preferably 0.7 or less. More preferably, the coefficient of static friction is 0.6 or less and the coefficient of dynamic friction is 0.5 or less. The surfaces on which the abrasion-resistant layer is formed slide easily if the coefficient of static friction and the coefficient of dynamic friction measured when the surfaces on which the abrasion-resistant layer is formed are held against each other have these values. For example, the surfaces do not snag on each other when clothing products or the like that use the waterproof moisture-permeable composite film are worn or removed, and the feel and ease of wearing and removing such products are improved.

FIG. 2 shows an example (cross-sectional view) of the waterproof moisture-permeable composite fabric of the present invention. The waterproof moisture-permeable fabric 20 has a cloth 13 on the side of the waterproof moisture-permeable composite film 10 opposite the surface on which the abrasion-resistant layer 12 is formed. The cloth 13

normally constitutes the outer material in products (clothing products) configured from the waterproof moisture-permeable fabric 20. In FIG. 2, 11 is the flexible base material. Also, 14 is an adhesive for bonding the waterproof moisture-permeable composite film 10 and the cloth 13.

The structural material for the cloth is not particularty limited. For example, metal fibers, ceramic fibers, can be used in addition to the natural fibers and synthetic fibers previously given as examples for the porous film constituting the waterproof moisture-permeable composite film. Also, possible examples of the type of cloth that can be used include woven fabric, knit fabric, netting, nonwoven fabric, felt. For example, when the fabric is used for outdoor clothing, a woven fabric configured from polyamide fiber, polyester fiber is preferred in terms of flexibility, strength, durability, cost, and light weight.

A conventionally known adhesive can be used to laminate the waterproof moisture-permeable composite film and the cloth. Such an adhesive may be a thermoplastic resin adhesive, as well as a thermosetting resin adhesive that can be hardened as a result of a reaction with heat, light, or moisture. Possible examples include various resin adhesives consisting of polyester, polyamide, polyurethane, silicone, polyacrylic, polyvinyl chloride, polybutadiene, polyolefin, and other such rubbers.

Among these, a polyurethane-based adhesive is a preferred example. A curing hot-melt adhesive is a particularly preferred example of a polyurethane-based adhesive.

A curing hot-melt adhesive is an adhesive that is solid at normal temperatures and turns to liquid of low viscosity when melted by heating, but is subjected to a curing reaction and converted to a highly viscous liquid or a solid as a result of maintaining the heating conditions, further increasing the temperature, or bringing the adhesive into contact with air or moisture. The curing reaction progresses in the presence of air or moisture, as well as a curing catalyst or a curing agent.

A preferred example of a curing polyurethane-based holt melt adhesive used to bond the waterproof moisture-permeable composite film and the cloth is one with a viscosity of 500 to 30000 mPa·s (more preferably 3000 mPa·s or less) when melted into a low-viscosity liquid of low viscosity under heating (specifically, when applied for bonding purposes). The viscosity referred to herein is a value measured with a cone-type rotor and a set temperature of 125˚C using an "ICI Cone & Plate Viscometer" made by Research Equipment.

A conventional urethane prepolymer that can undergo a curing reaction due to humidity (moisture) is preferred as such a curing polyurethane-based hot melt adhesive. This can be obtained, for example, as a result of subjecting a polyol component (polyester polyol, polyether polyol,) and polyisocyanate (TDI, MDI, XDI, IPDI, or another such aliphatic or aromatic diisocyanate, triisocyanate,) to an addition reaction so that the isocyanate groups remain on the ends. In such a urethane prepolymer, the presence of isocyanate groups on the ends causes a curing reaction due to the humidity in the air. The melting temperature of this urethane prepolymer is slightly higher than room temperature (50˚C or greater), or is more preferably 80 to 150˚C.

A possible example of the urethane prepolymer is the "Bond Master" sold by the Japan National Starch and Chemical Company, for example. This urethane polymer forms a viscous melt that can be applied to cloth or the like when heated at 70 to 150˚C, and then forms a semisolid in response to cooling at about room temperature after the waterproof moisture-permeable composite film and the cloth are affixed by means of this melt and excessive permeating diffusion of the melt into the cloth or the like is suppressed. The reaction then progresses due to the humidity in the air, and a soft yet strong bond can be obtained.

The method of applying the adhesive is not particularly limited, -and various conventional methods (rolling, spraying, brush coating,) can be employed.

It is recommended that the adhesive be applied in dots or in lines in order to ensure moisture permeability in the waterproof moisture-permeable fabric. The bonded surface area (surface area over which the adhesive is applied) is preferably 5 to 95% of the total surface area of the laminated surface, and is more preferably 15 to 50%. Also, the amount of the adhesive applied should be set with consideration to the irregularities and fiber density in the cloth surface, and the required bonding strength and durability. For example, the amount applied is preferably 2 to 50 $g/m^2$, and more preferably 5 to 20 $g/m^2$. If the amount of adhesive applied is too small, the bonding strength is insufficient, and durability that is sufficient to withstand washing cannot be obtained, for example. Conversely, too much of the applied adhesive is not preferable because the texture of the waterproof moisture-permeable fabric becomes too hard.

An example of a preferred laminating method is a method wherein a melt of the curing polyurethane-based adhesive is applied or sprayed onto the waterproof moisture-permeable composite film with a roll having a gravure pattern, and the cloth is layered thereon and pressed with a roll. Satisfactory bonding strength can be ensured, the resulting fabric has a good texture, and the yield ratio is also satisfactory, particularly when a coating method using a roll that has a gravure pattern is employed.

Clothing products (waterproof clothes, waterproof gloves,) are examples of a primary application of the waterproof moisture-permeable fabric of the present invention, but the present invention is also suitable for cloth products that are used outdoors and require waterproof and moisture-permeable properties (for example, tents, sleeping bags,).

## Examples

The present invention will now be described in detail based on working examples. The following working examples are not intended to limit the present invention, and all modifications within a range that does not deviate from the objects in the preceding and following descriptions are incorporated into the technological scope of the present invention. The waterproof moisture-permeable composite film and the waterproof moisture-permeable fabric were evaluated in the present working example as described below.

## Test Methods

(1) Covered Surface Area Ratio of Abrasion-resistant layer

The waterproof moisture-permeable composite film was monitored within a 2.6 mm × 3.5 mm field of vision expanded by one hundred times using an optical microscope ("digital microscope VH-7000" made by Keyence Corporation), the region of the abrasion-resistant layer in the resulting digital image was displayed onscreen, and the surface area was calculated with the accompanying software to determine the surface area ratio of the section on the side of the flexible base material covered by the abrasion-resistant layer.

(2) Moisture Permeability

The moisture permeability of the waterproof moisture-permeable composite film and the waterproof moisture-permeable fabric was measured according to JIS L 1099 B-2.

(3) Sliding Capacity

The coefficient of static friction and the coefficient of dynamic friction between surfaces of the same waterproof moisture-permeable fabric on which the abrasion-resistant layer was formed were measured according to ASTM D 1894-99 using a surface property tester "Type 14DR" made by Heidon as the measuring device. Measurement was performed with one arbitrary direction in the fabric and another direction perpendicular to the first, and the average values were used as the coefficient of static friction and the coefficient of dynamic friction of the waterproof moisture-permeable composite film.

(4) Washing Treatment

A waterproof moisture-permeable fabric cut into squares measuring 35 cm × 35 cm was subjected to washing treatment with a synthetic detergent for washing ("Attack" made by Kao Corporation) using a household fully automatic washing machine ("NA-F70PX1" made by Matsushita Electric Industrial Co.), and was then set out to dry at room temperature, constituting one cycle. Fabrics that had undergone this cycle 20 times and those that had undergone this cycle 50 times were subjected to a sensory evaluation by touch, to be described later. The sliding capacity in (3) was also evaluated for the fabric that had undergone the cycle 50 times. During washing, the 35 cm × 35 cm load cloth (a cotton metal cloth conforming to JIS L 1096 that had been sewed and mended at the periphery) was adjusted so that the total amount that included the waterproof moisture-permeable fabric was 300 g ± 30 g. Washing lasted 6 minutes using 40 liters of tap water and 30 g of the detergent, and the load was rinsed twice and drained for 3 minutes.

(5) Abrasion Test

Using a Martindale Abrasion Tester described in JIS L 1096 ("Nu-Martindale Abrasion and Pilling Tester" made by James H. Heal & Co.) in Abrasion mode, the waterproof moisture-permeable fabric was affixed on the abrasion cloth affixing stand, a standard wool abrasion cloth was affixed to the sample holder, and the waterproof moisture-permeable fabric was subjected to friction at a load of 6 kPa by means of the standard wool abrasion cloth. A water resistance test described below was conducted every time 10,000 friction cycles had been applied, up until 100,000 cycles.

The water penetration test was conducted using a water resistance testing device described in the low water pressure method in JIS L 1096 ("Schopper-type Water Resistance Tester WR-DM" made by Daiei Kagaku Seiki Mfg. Co.). A water pressure of 20 kPa was applied to the waterproof moisture-permeable fabric and maintained for 1 minute, then when water appeared on the surface of the fabric opposite the side to which the water pressure was applied, it was determined whether or not water resistance was satisfactory, and water resistance was deemed satisfactory when no water was observed.

(6) Sensory Evaluation By Touch

The feel of the surfaces on which the abrasion-resistant layer was formed was evaluated for a waterproof moisture-permeable fabric that, prior to undergoing the evaluation tests (untreated), had been washed and subjected to the abrasion test 100,000 times. The evaluation standards were as follows: ○ - a rustling, dry-touch sensation; □ - a moist sensation; and × - a sticky or gripping sensation.

**Example 1**

Creation of Waterproof Moisture-Permeable Composite Film

A mixed liquid obtained as a result of mixing a hydrophilic polyurethane resin ("Hypol 2000" made by Dow Chemical Corporation) and ethylene glycol at a NCO/OH equivalent ratio of 1.2 was prepared. This mixed liquid was applied with a roll coater to the surface of a porous PTFE film ("Gore-Tex" made by Japan Gore-Tex, porosity: 80%, average pore diameter: 0.2 μm, thickness: 40 μm). The product was then dried for 5 minutes at 100˚C and subjected to moist heat treatment for 60 minutes at 100˚C and 80% RH (relative humidity), resulting in a complex (flexible base material) having a hydrophilic polyurethane resin layer on the surface of a porous PTFE film.

A paste for forming an abrasion-resistant layer with the composition shown in Table 1 was prepared and applied up to an amount of 40 g/$m^2$ to the surface of the hydrophilic polyurethane resin layer of the complex by means of screen printing using a screen with a density of 35 lines/2.54 cm and an opening area ratio of 20% (longitudinally and transversely aligned square-shaped gaps with sides of 0.325 mm at 0.726-mm intervals). The product was dried and heated for 30 seconds at 140˚C using a hot-air circulating oven, resulting in a waterproof moisture-permeable composite film having a non-continuous abrasion-resistant layer.

Table 1

| Components | Content (parts by mass) |
|---|---|
| polyamide resin "Vestamelt 430P1" made by Degussa-Huls AG | 25 |
| polyisocyanate "NBP75" made by Meisei Chemical Works | 2 |
| thickener "MIROX HP" made by Stockhausen AG | 1 |
| water | 72 |

Creation of Waterproof Moisture-Permeable Fabric

A polyurethane-based humidity reaction-type holt melt adhesive ("Bond Master 170-7254" made by the Japan National Starch and Chemical Company) was heated until the adhesive temperature was 120˚C to form a melt, and the melt was applied in a dotted fashion by means of gravure printing to the surface of the waterproof moisture-permeable composite film opposite the surface on which the abrasion-resistant layer was formed until the applied amount was 5 g/$m^2$. Then, a plain-woven fabric ("AKL 4828" made by Asahi Kasei Corporation) configured from 44dtex filament yam was layered over the surface coated with the adhesive, and was laminated as a result of pressing with a roll. The resulting laminate was left standing for 24 hours in a thermo-humidistat at 40˚C and 80% RH, completing the curing reaction of the adhesive.

Next, a water repellant treatment was applied to the nylon plain-woven fabric. A dispersion liquid was prepared containing a mixture of 3 mass% of a water repelling agent ("Asahi Guard AG-7000" made by Meisei Chemical Works) and 97 mass% of water, which was applied to the surface of the nylon plain-woven fabric with a Kiss Coater in at least the saturated amount, and the excess dispersion liquid was then removed with a mangle roll. The applied amount of the dispersion liquid at this time was about 25 g/$m^2$. The fabric was then dried and heated for 30 seconds at 130˚C using a heat circulation oven to obtain a waterproof moisture-permeable fabric.

The resulting waterproof moisture-permeable composite film and waterproof moisture-permeable fabric were subjected to the evaluations described above. The results of evaluating the waterproof moisture-permeable composite film are shown in Table 3, and the results of evaluating the waterproof moisture-permeable fabric are shown in Tables 4 and 5.

**Example 2**

A water-repellant finish was applied to a nylon plain-woven fabric configured form 44dtex filament yam ("AKL

4828" made by Asahi Kasei Corporation). This water-repellant finish was applied for the purpose of ensuring that when a polyurethane resin solution was applied as described later, the solution did not completely permeate the fabric. A dispersion liquid was prepared containing a mixture of 1 mass% of a water repelling agent ("DIC Guard F-18" made by Dai Nippon Ink and Chemicals) and 99 mass% of water, which was applied to the surface of the nylon plain-woven fabric with a Kiss Coater in at least the saturated amount, and the excess dispersion liquid was then removed with a mangle roll. The applied amount of the dispersion liquid at this time was about 25 g/$m^2$. The fabric was then dried and heated for 30 seconds at 130˚C using a heat circulation oven.

The nylon plain-woven fabric after undergoing water repellant treatment was coated with the polyurethane resin solution with the composition shown in Table 2 using a Knife Over Roll Coater until the applied amount reached 200 g/$m^2$. The coated nylon plain-woven fabric was immersed for five minutes at less than 30˚C in a coagulated solution filled in an aqueous solution consisting of 10 mass% of N,N-dimethyl formamide, and a wet coagulate was formed out of the polyurethane resin. Then, the resulting product was washed for 10 minutes in hot water at 60˚C and dried with hot air at 140˚C to obtain a porous structure (flexible base material) coated with a polyurethane resin.

An abrasion-resistant layer was formed on the surface of the porous structure coated with the polyurethane resin in the same manner as in Example 1.

Next, a water repellant treatment was applied to the nylon plain-woven fabric. A solution was prepared containing a mixture of 5 mass% of a water repelling agent ("DIC Guard NH-10" made by Dai Nippon Ink and Chemicals) and 95 mass% of the mineral turpentine, which was applied to the surface of the nylon plain-woven fabric with a Kiss Coater in at least the saturated amount, and the excess dispersion liquid was then removed with a mangle roll. The amount in which the solution was applied at this time was about 20 g/$m^2$. The fabric was then dried and heated for 30 seconds at 130˚C using a heat circulation oven and then subjected to further heat treatment for 60 seconds at 140˚C to obtain a waterproof moisture-permeable film. A waterproof moisture-permeable composite fabric was obtained using this waterproof moisture-permeable composite film in the same manner as in Example 1. The results of evaluating the resulting waterproof moisture-permeable composite film and waterproof moisture-permeable fabric are shown in Tables 3 through 5.

Table 2

| Components | Content (parts by mass) |
|---|---|
| polyester-based polyurethane resin solution "Crisvon MP-829" made by Dai Nippon Ink and Chemicals | 50 |
| polyester-based polyurethane resin solution "Crisvon MP-829H" made by Dai Nippon Ink and Chemicals | 20 |
| isocyanate-based cross-linking agent "Crisvon CL-10" made by Dai Nippon Ink and Chemicals | 1 |
| film-forming facilitator "Crisvon SD-17B" made by Dai Nippon Ink and Chemicals | 2 |
| N,N-dimethyl formamide | 27 |

**Comparative Example 1**

A waterproof moisture-permeable composite film was created without forming an abrasion-resistant layer on the complex (flexible base material) obtained in Example 1, and the film was used to form a waterproof moisture-permeable fabric in the same manner as in Example 1. The results of evaluating the resulting waterproof moisture-permeable composite film and waterproof moisture-permeable fabric are shown in Tables 3 through 5.

**Comparative Example 2**

A waterproof moisture-permeable composite film was created without forming an abrasion-resistant layer on the porous structure (flexible base material) obtained in Example 2, and the film was used to form a waterproof moisture-permeable fabric in the same manner as in Example 1. The results of evaluating the resulting waterproof moisture-permeable composite film and waterproof moisture-permeable fabric are shown in Tables 3 through 5.

**Comparative Example 3**

A waterproof moisture-permeable composite film having an abrasion-resistant layer configured from the hydrophilic polyurethane resin disclosed in Example 1 in Japanese Patent Publication No. 3346567 (Working Example 1 in the Specification of U.S. Patent Publication No. 5209969) was created. This hydrophilic polyurethane resin was used as the structural material for the abrasion resistant dots in Japanese Domestic Republication No. 2001-503107 previously mentioned.

100 parts by mass of hexamethylene diamine (HMD) were added to 244 parts by mass of an ethylene/propylene oxide polyol at 45°C and normal pressure, and the resulting mixture was bubbled with $CO_2$ to form a paste solid content of 35 mass%. The reduction in the content of free HMD separated was monitored by titration until all the HMD in the paste was converted to HMD carbamate, and the reaction was immediately stopped as soon as the free HMD had disappeared.

Next, a polyurethane resin solution was obtained as a result of adding 31 parts by mass of the paste at room temperature to 126 parts by mass of a polyurethane resin, which was a reaction product of 43 parts by mass of diphenyl methane diisocyanate and 63 parts by mass of polytetramethylene glycol. The resulting polyurethane resin solution contained 7 mass% of HMD carbamate.

The surface of the hydrophilic polyurethane resin layer in the complex (flexible base material) formed in Example 1 was coated with the polyurethane resin solution kept at 70°C by means of gravure printing until the applied amount was 15 g/m$^2$. The gravure roll used had a density of 8 lines/2.54 cm and an opening area ratio of 40% (circular dots with a diameter of 2.1 mm were arranged in a fine hexagonal pattern with an interval of 3.175 mm between the centers of adjacent dots). The coated complex was heated on a hot plate at 180°C, and the applied polyurethane resin was cured to obtain a waterproof moisture-permeable composite film. This waterproof moisture-permeable composite film was used to obtain a waterproof moisture-perrmable fabric in the same manner as in Example 1. The results of evaluating the resulting waterproof moisture-permeable composite film and waterproof moisture-permeable fabric are shown in Tables 3 through 5.

**Comparative Example 4**

A waterproof moisture-permeable composite film having a resin layer configured from a hydrophilic polyurethane resin and spherical acrylic particles was formed. This waterproof moisture-permeable composite film is the equivalent of the moisture-permeable waterproof treated cloth disclosed in the working example in Japanese Laid-Open Patent Application No. 2002-61009, and an object of the resin layer (composite resin layer) of this cloth in Japanese Laid-Open Patent Application No. 2002-61009 is to improve sliding capacity and wear comfort.

A solution containing a mixture of 100 parts of a hydrophilic polyurethane solution ("Hi-Muren Y-231" made by Dainichiseika Color and Chemicals Mfg.), 15 parts each of cross-linked acrylic particles A with an average particle diameter of 28 μm and cross-linked acrylic particles B with an average particle diameter of 40 μm ("Chemisnow MR" made by Soken Chemical and Engineering), 75 parts of methylethyl ketone, and 75 parts of toluene was printed in dotted fashion onto the polyurethane resin-coated surface of the porous structure (flexible base material) formed in Example 2 using a gravure roll with a density of 35 lines/2.54 cm and an opening area ratio of 40% (square patterns measuring 0.459 mm on a side, arranged longitudinally and transversely at 0.726-mm intervals). The structure was dried and heated for 1 minute at 80°C and further heat treated for three minutes at 160°C to obtain a waterproof moisture-permeable composite film. This waterproof moisture-permeable composite film was used to obtain a waterproof moisture-permeable fabric in the same manner as in Example 1. The results of evaluating the resulting waterproof moisture-permeable composite film and waterproof moisture-permeable fabric are shown in Tables 3 through 5.

Table 3

| | Covered surface area ratio of abrasion-resistant layer (%) | Moisture permeability (g/m$^2$·h) |
|---|---|---|
| Example 1 | 20 | 510 |
| Example 2 | 20 | 330 |
| Example 3 | - | 600 |
| Example 4 | - | 390 |
| Example 5 | 40 | 390 |
| Example 6 | 40 | 370 |

Table 4

| | Mass ($g/m^2$) | Thickne ss (mm) | Permeation rate ($g/m^2 \cdot hr$) | Coefficient of static friction | | Coefficient of dynamic friction | | Sensory feel | | | |
|---|---|---|---|---|---|---|---|---|---|---|---|
| | | | | before washing | after 50 washing cycles | before washing | after 50 washing cycles | before washing | after 20 washing cycles | after 50 washing cycles | after 100000 abrasion tests |
| Example 1 | 90 | 0.16 | 430 | 0.51 | 0.44 | 0.27 | 0.29 | ○ | ○ | ○ | ○ |
| Example 2 | 90 | 0.15 | 280 | 0.53 | 0.43 | 0.28 | 0.28 | ○ | ○ | ○ | ○ |
| Comparative Example 1 | 85 | 0.12 | 500 | 0.58 | 0.50 | 0.46 | 0.47 | 0 | □ | □ | □ |
| Comparative Example 2 | 85 | 0.13 | 330 | 1.37 | 1.43 | 1.09 | 0.99 | × | × | × | × |
| Comparative Example 3 | 105 | 0.25 | 330 | 2.03 | 2.23 | 1.97 | 2.01 | × | × | × | × |
| Comparative Example 4 | 90 | 0.14 | 310 | 0.50 | 2.16 | 0.34 | 1.87 | ○ | □ | × | × |

Table 5

| | Water resistance | | | | | | | | | |
|---|---|---|---|---|---|---|---|---|---|---|
| | After 10000 abrasion tests | After 20000 brasion tests | After 30000 abrasion tests | After 40000 abrasion tests | After 50000 abrasion tests | After 60000 abrasion tests | After 70000 abrasion tests | After 80000 abrasion tests | After 90000 abrasion tests | After 100000 abrasion tests |
| Example 1 | successful | successful | successful | successful | successful | successful | successful | successful | successful | successful |
| Example 2 | successful | successful | successful | successful | successful | successful | successful | successful | successful | successful |
| Comparative Example 1 | successful | successful | unsuccessful | - | - | - | - | - | - | - |
| Comparative Example 2 | successful | unsuccessful | - | - | - | - | - | - | - | -- |
| Comparative Example 3 | successful | successful | successful | successful | successful | successful | successful | successful | successful | successful |
| Comparative Example 4 | successful | successful | successful | unsuccessful | - | - | - | - | - | - |

The following can be deduced from Tables 3 through 5. The waterproof moisture-permeable fabrics obtained from the waterproof moisture-permeable composite films in Example 1 and Example 2 with a suitable configuration for the flexible base material and abrasion-resistant layer have a low coefficient of static friction and coefficient of dynamic friction, and slide easily against other materials. The variation in the coefficient of static friction and the coefficient of dynamic friction is low even after 50 washing cycles, and it is apparent that the abrasion-resistant layer is efficiently prevented from being shed. Such low friction coefficients (ease of sliding) yield satisfactory results for the sensory feel. Clothing products obtained form the waterproof moisture-permeable fabrics in Examples 1 and 2 have a pleasant feel and are easily worn and removed.

It was also learned that the waterproof moisture-permeable fabrics in Examples 1 and 2 are lightweight and have satisfactory moisture permeability and satisfactory water resistance after the abrasion test (free of water leakage), and the flexible base material is satisfactorily shielded by the abrasion-resistant layer.

By contrast, the waterproof moisture-permeable fabrics obtained from the waterproof moisture-permeable composite films in Comparative Examples 1 and 2 that did not have an abrasion-resistant layer were confirmed to leak water during water resistance evaluation after the abrasion test, and also had poor durability against friction. Also, the waterproof moisture-permeable fabric obtained from the waterproof moisture-permeable composite film in Comparative Example 3 having an abrasion-resistant layer configured from a polyurethane resin was not observed to leak any water during water resistance evaluation after the abrasion test, but despite the fabric being highly durable, the surface on which the abrasion-resistant layer was formed had a high coefficient of static friction and coefficient of dynamic friction, and also had poor slidability and sensory feel. Clothing products obtained from this waterproof moisture-permeable fabric in Comparative Example 3 have an unpleasant feel and are difficult to wear and remove compared to clothing products obtained from the waterproof moisture-permeable fabrics in Examples 1 and 2. Furthermore, the waterproof moisture-permeable fabric in Comparative Example 4 initially had satisfactory characteristics after being manufactured, but these characteristics deteriorated due to washing tests and abrasion tests.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

**1.** A composite film (10) having an abrasion-resistant layer (12) on one side of a flexible composite film (11) that is waterproof and permeable to water vapour; said waterproof moisture-permeable composite film (10) wherein:

the flexible film (11) contains a polar polymer; and
the abrasion-resistant layer (12) contains a cross-linked polyamide resin.

**2.** The waterproof moisture-permeable composite film (10) according to claim 1, wherein the cross-linked polyamide resin is obtained as a result of cross-linking a homopolymer or copolymer of Nylon 12 with the help of a cross-linking agent which has at least two functional groups that react with active hydrogen.

**3.** The waterproof moisture-permeable composite film (10) according to claim 2, wherein the cross-linking agent is polyisocyanate.

**4.** The waterproof moisture-permeable composite film (10) according to claims 1, 2 or 3, wherein the flexible film (11) includes a porous section.

**5.** The waterproof moisture-permeable composite film (10) according to claims 1, 2, 3 or 4, wherein the flexible film (11) is a complex of a polar polymer and porous polytetrafluoroethylene.

**6.** The waterproof moisture-permeable composite film (10) according to any preceding claim, wherein the flexible film (11) has a polar polymer on at least part of one side of a porous polytetrafluoroethylene film; and
the abrasion-resistant layer (12) is formed via the polar polymer.

**7.** The waterproof moisture-permeable composite film (10) according to any preceding claim, wherein the flexible film (11) has a polar polymer layer on one side of a porous polytetrafluoroethylene film.

**8.** The waterproof moisture-permeable composite film (10) according to any preceding claim, wherein the polar polymer is a polyurethane resin.

**9.** The waterproof moisture-permeable composite film (10) according to any preceding claim, wherein 3 to 70% of the surface area of one side of the flexible film (11) is covered by the abrasion-resistant layer (12).

**10.** The waterproof moisture-permeable composite film (10) according to any preceding claim, wherein the coefficient of static friction and the coefficient of dynamic friction between the surfaces on which the abrasion-resistant layer (12) is formed are both 0.7 or less as measured with the help of a method conforming to ASTM D 1894.

**11.** A waterproof moisture-permeable composite fabric (20), **characterized in that** the fabric (20) is placed on the side of the waterproof moisture-permeable composite film (10) according to any preceding claim opposite the side on which the abrasion-resistant layer (12) is formed.

**12.** A clothing product **characterized in** containing the waterproof moisture-permeable composite fabric (20) according to claim 11 as a structural element.

**13.** A tent **characterized in** containing the waterproof moisture-permeable composite fabric (20) according to claim 11 as a structural element.

**14.** A sleeping bag **characterized in** containing the waterproof moisture-permeable composite fabric (20) according to claim 11 as a structural element.

**Patentansprüche**

**1.** Folienverbund (10), der eine abriebfeste Schicht (12) auf einer Seite eines flexiblen Folienverbunds (11) aufweist, der wasserdicht und wasserdampfdurchlässig ist; der wasserdichte, feuchtigkeitsdurchlässige Folienverbund (10), wobei:

die flexible Folie (11) ein polares Polymer enthält; und
die abriebfeste Schicht (12) ein vernetztes Polyamidharz enthält.

**2.** Wasserdichter, feuchtigkeitsdurchlässiger Folienverbund (10) nach Anspruch 1, wobei das vernetzte Polyamidharz durch Vernetzen eines Homopolymers oder Copolymers von Nylon 12 mit Hilfe eines Vernetzungsmittels erhalten wird, das mindestens zwei funktionelle Gruppen aufweist, die mit aktivem Wasserstoff reagieren.

**3.** Wasserdichter, feuchtigkeitsdurchlässiger Folienverbund (10) nach Anspruch 2, wobei das Vernetzungsmittel Polyisocyanat ist.

**4.** Wasserdichter, feuchtigkeitsdurchlässiger Folienverbund (10) nach den Ansprüchen 1, 2 oder 3, wobei die flexible Folie (11) einen porösen Abschnitt umfasst.

**5.** Wasserdichter, feuchtigkeitsdurchlässiger Folienverbund (10) nach den Ansprüchen 1, 2, 3 oder 4, wobei die flexible Folie (11) ein Komplex eines polaren Polymers und porösen Polytetrafluorethylens ist.

**6.** Wasserdichter, feuchtigkeitsdurchlässiger Folienverbund (10) nach einem der vorhergehenden Ansprüche, wobei die flexible Folie (11) ein polares Polymer auf mindestens einem Teil einer Seite einer porösen Polytetrafluorethylenfolie aufweist; und
die abriebfeste Schicht (12) durch das polare Polymer gebildet wird.

**7.** Wasserdichter, feuchtigkeitsdurchlässiger Folienverbund (10) nach einem der vorhergehenden Ansprüche, wobei die flexible Folie (11) eine polare Polymerschicht auf einer Seite einer porösen Polytetrafluorethylenfolie aufweist.

**8.** Wasserdichter, feuchtigkeitsdurchlässiger Folienverbund (10) nach einem der vorhergehenden Ansprüche, wobei das polare Polymer ein Polyurethanharz ist.

**9.** Wasserdichter, feuchtigkeitsdurchlässiger Folienverbund (10) nach einem der vorhergehenden Ansprüche, wobei 3 bis 70 % des Oberflächenbereichs einer Seite der flexiblen Folie (11) durch eine abriebfeste Schicht (12) bedeckt sind.

**10.** Wasserdichter, feuclstigkeitsdurchlässiger Folienverbund (10) nach einem der vorhergehenden Ansprüche, wobei der statische Reibungskoeffizient und der dynamische Reibungskoeffizient zwischen den Oberflächen, auf denen die abriebfeste Schicht (12) gebildet ist, beide 0,7 oder weniger betragen, wie mit Hilfe einer ASTM D 1894 entsprechenden Methode gemessen.

**11.** Wasserfestes, feuchtigkeitsdurchlässiges Verbundgewebe (20), **dadurch gekennzeichnet, dass** das Gewebe (20) auf die Seite des wasserfesten, feuehtigkeitsdurchlässigen Folienverbunds (10) einem der vorhergehenden Ansprüche gemäß der Seite gegenüber positioniert wird, auf der die abriebfeste Schicht gebildet wird.

**12.** Kleidungsprodukt, **dadurch gekennzeichnet, dass** es das wasserfeste, feuchtigkeitsdurchlässige Verbundgewebe (20) nach Anspruch 11 als Strukturelement enthält.

**13.** Zelt, **dadurch gekennzeichnet, dass** es das wasserfeste, feuchtigkeitsdurchlässige Verbundgewebe (20) nach Anspruch 11 als Strukturelement enthält.

**14.** Schlafsack, **dadurch gekennzeichnet, dass** er das wasserfeste, feuchtigkeitsdurchlässige Verbundgewebe (20) nach Anspruch 11 als Strukturelement enthält.

## Revendications

**1.** Film composite (10) ayant une couche résistant à l'abrasion (12) sur une face d'un film composite souple (1 1) qui est imperméable à l'eau et perméable à la vapeur d'eau ; ledit film composite perméable à l'humidité-imperméable à l'eau (10) dans lequel :

le film souple (11) contient un polymère polaire ; et la couche résistant à l'abrasion (12) contient une résine de polyamide réticulé.

**2.** Film composite perméable à la vapeur d'eau et imperméable à l'eau (10) selon la revendication 1, dans lequel la résine de polyamide réticulé est obtenue en résultat de la réticulation d'un homopolymère ou d'un copolymère de nylon 12 avec l'aide d'un agent de réticulation qui a au moins deux groupes fonctionnels qui réagissent avec l'hydrogène actif.

**3.** Film composite perméable à la vapeur d'eau et imperméable à l'eau (10) selon la revendication 2, dans lequel l'agent de réticulation est un polyisocyanate.

**4.** Film composite perméable à la vapeur d'eau et imperméable à l'eau (10) selon les revendications 1, 2 ou 3, dans lequel le film souple (11) inclut une section poreuse.

**5.** Film composite perméable à la vapeur d'eau et imperméable à l'eau (10) selon les revendications 1, 2, 3 ou 4, dans lequel le film souple (11) est un complexe d'un polymère polaire et de polytétrafluoroéthylène poreux.

**6.** Film composite perméable à la vapeur d'eau et imperméable à l'eau (10) selon l'une quelconque des revendications précédentes, dans lequel le film souple (11) a un polymère polaire sur au moins une partie d'une face d'un film de polytétrafluoroéthylène poreux ; et
la couche résistant à l'abrasion (12) est formée via le polymère polaire.

**7.** Film composite perméable à la vapeur d'eau et imperméable à l'eau (10) selon l'une quelconque des revendications précédentes, dans lequel le film souple (11) a une couche de polymère polaire sur une face d'un film de polytétrafluoroéthylène poreux.

**8.** Film composite perméable à la vapeur d'eau et imperméable à l'eau (10) selon l'une quelconque des revendications précédentes, dans lequel le polymère polaire est une résine de polyuréthane.

**9.** Film composite perméable à la vapeur d'eau et imperméable à l'eau (10) selon l'une quelconque des revendications précédentes, dans lequel 3 à 70 % de la surface d'une face du film souple (11) sont recouverts de la couche résistant à l'abrasion (12).

**10.** Film composite perméable à la vapeur d'eau et imperméable à l'eau (10) selon l'une quelconque des revendications précédentes, dans lequel le coefficient de frottement statique et le coefficient de frottement dynamique entre les surfaces sur lesquelles la couche résistant à l'abrasion (12) est formée sont tous les deux de 0,7 ou moins tel que mesuré à l'aide d'un procédé conforme à la norme ASTM D 1894.

**11.** Étoffe composite perméable à la vapeur d'eau et imperméable à l'eau (20) **caractérisée en ce que** l'étoffe (20) est placée sur la face du film composite perméable à la vapeur d'eau et imperméable à l'eau (10) selon l'une quelconque des revendications précédentes opposée à la face sur laquelle la couche résistant à l'abrasion (12) est formée.

**12.** Produit du type vêtement **caractérisé en ce qu'**il contient l'étoffe composite perméable à la vapeur d'eau et imperméable à l'eau (20) selon la revendication 11 comme élément structurel.

**13.** Tente **caractérisée par le fait qu'**elle contient l'étoffe composite perméable à la vapeur d'eau et imperméable à l'eau (20) selon la revendication 11 comme élément structurel.

**14.** Sac de couchage **caractérisé par le fait qu'**il contient l'étoffe composite perméable à la vapeur d'eau et imperméable à l'eau (20) selon la revendication 11 comme élément structurel.

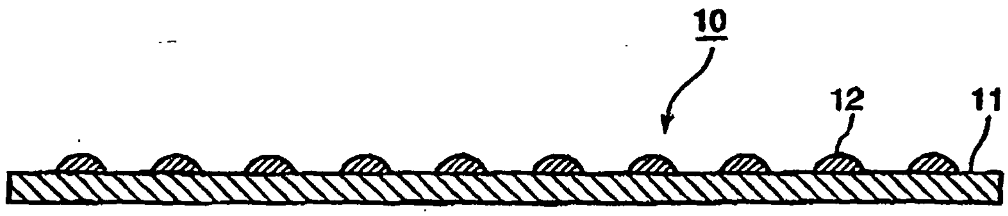


Figure 1

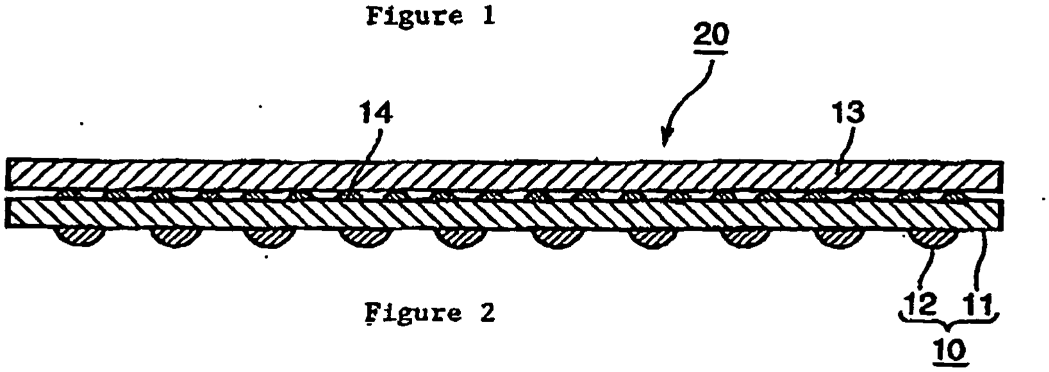


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001503107 A
- JP 2002020916 A
- JP 2002061009 A
- JP 46007284 A
- JP 50022881 A
- JP 3504876 A
- WO 9422928 A
- JP 55007483 A
- JP 3346567 B
- US 5209969 A